# EUROPEAN PATENT SPECIFICATION

(11) **EP 1 791 000 B1**
(45) Date of publication and mention of the grant of the patent: **25.03.2009**
(21) Application number: 05397022.4
(22) Date of filing: 24.11.2005
(51) Int. Cl.: G02B 1/04

(54) **Polymer composition and polymerizable composition for thermally curable multifunctional encapsulation material for communications optoelectronics**
Polymerzusammensetzung und polymerisierbare Zusammensetzung für thermisch härtbares Mehrzweck-Verkapselungsmaterial für Kommunikationsoptoelektronik
Composition polymérique et composition polymérisable pour matériau d'encapsulation multifonctionnel thermodurcissable pour composants optoélectroniques de communication

(43) Date of publication of application: 30.05.2007
(73) Proprietor: VALTION TEKNILLINEN TUTKIMUSKESKUS, 02150 Espoo 15 (FI); Tampereen teknillinen yliopisto, 33720 Tampere (FI)
(72) Inventor: Enqvist, Jouni, 33960, Pirkkala (FI); Enqvist, Maarit, 33960, Pirkkala (FI)
(74) Representative: Hakola, Unto Tapani

(56) References cited:
- US-A- 5 136 682
- US-A- 5 203 896
- PATENT ABSTRACTS OF JAPAN vol. 2003, no. 12, 5 December 2003 (2003-12-05) & JP 2004 224886 A (DAINIPPON INK & CHEM INC), 12 August 2004 (2004-08-12) & DATABASE WPI Derwent Publications Ltd., London, GB; AN 2004-628345

## Description

### Field of the invention

The present invention relates to an optical polymer composition and a polymerizable composition used as starting material. The present invention also relates to the use of the starting material. The optical polymer composition in question can be used in various optical applications, where it can act as adhesive agent (glue) in joining optical components together, as construction material for various optical components (such as lenses), in which function it can also have adhering properties to form a lens or some other optical component on a structural part or substrate or between two structural parts, and as encapsulant in general in the field of optics. An important field of application is communications optoelectronics where the composition can have any of the above-mentioned functions and forms an optical transmission path for data whose optical intensity is high.

### Background of the invention

Optical polymer compositions must be optically clear (transparent), have no coloration or structural defects (microscopic cracks, bubbles etc.) that might be harmful to the transmission of data in optical form, and they must be stable during the use in various environments and conditions. They must not be susceptible to moisture because moisture absorption changes their optical behaviour and weaken optical data transmission. Moisture absorption may also weaken the mechanical strength of optical junctions made from optical encapsulants and cause chemical hydrolytic degradation of the material especially in higher temperatures. They must also be safe and cheap to manufacture in industry.

Typically, an optical polymer is cured from monomeric or oligomeric starting material, which is in deformable state so that the necessary shape of component and/or joint/junction between two parts can be obtained, where after the composition is cured to a fixed shape in its location. The starting material contains a monomer or a monomer and oligomer, and an initiator for the polymerization. Coloration is a typical defect, and the optical polymer compositions suffer typically from yellowing. Literature study, theoretical considerations, and experimental work have indicated that different thermal or UV-initiators and some other additives used as property modifiers may be principal reasons for yellowing and thermal instability of many commercial optical polymer materials. UV curing or photocatalyzed curing in general suffers from limitations related to penetration of light to the polymerizable composition.

In thermal curing of a polymerizable composition, the problem is elevated temperature which may be harmful to circuits and components of an optoelectronic device especially with long curing times.

Several curable compositions are known form the prior art. US-6,760,533 shows an adhesive composition for bonding optical parts based on epoxy resins, epoxysilane, amine curing agent, water and alcohol. US-6,798,792 shows the use of several silsesquioxane derivatives as building blocks to form organic-inorganic hybrid polymers having curing temperatures below 400 °C and thermal decomposition temperature of the final polymer above 300 °C. The said silsesquioxane oligomers are applied as relatively diluted solutions in contact surfaces between optical fibres, followed by the evaporation of solvent. The starting material of this kind is susceptible to crack generation. US-4,889,901 discloses ultraviolet curable coating compositions for optical glass fibres. The composition comprises acrylateterminated polyurethane and silsesquioxane oligomer polyacrylate together with a reactive diluent (typically ethoxyethoxyethyl acrylate or phenoxyethylacrylate), which reduces the glass transition temperature of the coating. In the examples, the amount of the reactive diluent is about 17 to 23 wt-%. The composition also contains the usual ketonic phtoinitiators to initiate cure when exposed to radiation. Finally, an example of the use of an optical adhesive is shown in US-6,773,169, namely coupling a surface-oriented optoelectronic element with an optical fibre. This document does not specify the constituents of the adhesive.

### Summary of the invention

It is the object of the present invention to form a clear colourless optical polymer composition that can be used in the above-mentioned applications for lens formation and for gluing optical components on parts or substrates such as circuit boards. A special object of the present invention is to provide an additive-free starting composition which would overcome at least most of the earlier problems.

The objects of the invention are reached by an optical polymer composition that comprises polymerized and cured trimethylolpropane triacrylate and certain other acrylates as modifiers. The basic building block in the starting material, trimethylolpropane triacrylate, does nor need initiators or catalysts for thermal polymerization and curing. Consequently, a composition which contains spontaneously polymerized trimethylolpropane triacrylate together with other acrylates as modifiers, can be formed. Isobornyl acrylate, among the group of bicyclic terpene acrylates, is the most preferred modifier to improve clarity (transparency) of cured compositions.

Further, a commonly used reactive solvent in the starting (uncured) composition, divinyl benzene (DVB) can be replaced with a more reactive and acceptable reagent, butanediol-diacrylate (BDDA), because of toxicological reasons and a bad smell of the former.

The optical polymer composition further contains reactive siloxane-based nanofiller, such as a silsesquioxane trisacrylate. This functionalized silsesquioxane nanofiller improves thermal stability and hardness of the composition.

According to a preferred method for forming the polymer composition from the starting composition, inert gas atmosphere is used during the polymerization and curing. This is based on the finding that crosslinking reactions responsible for formation of hard cured optical polymer material may be suppressed by oxygen. However, using optimized raising temperature programming e.g. in a gas chromatograph oven, catalyst-free polymerization can also be performed under normal air atmosphere. Rising temperature profile accelerates polymerization and curing and suppresses inhibiting effects of oxygen.

### Brief description of the drawings

The invention will be described in more detail in the following with reference to the attached drawings, where
- Fig. 1: shows the structure of the key component in the polymerizable composition, a) structural formula and b) molecular modelling presentation,
- Fig 2: shows the structure of the preferred mechanical and optical property modifier, a) structural formula and b) molecular modelling presentation,
- Fig 3: shows a preferred reactive solvent, a) structural formula and b) molecular modelling presentation,
- Fig. 4: shows the structure of the nanoscale filler, a) structural formula and b) molecular modelling presentation, and
- Fig. 5: shows an example of the use of the composition.

### Detailed description of the preferred embodiments

In the present description, all percentage values are based on weights of the substances unless indicated otherwise.

The term "polymerized" and "cured" in this context shall be interpreted to mean chemical joining of monomers or oligomers to the monomers or oligomers of the same structure as well as the chemical joining of monomers or oligomers to monomers or oligomers of another kind, to form a large macromolecule which can consist of one basic monomer or oligomer or two or several basic monomers or oligomers.

Further, the term "acrylate" and related terms shall be understood to encompass both acrylate and methacrylate, unless it is clear from the context that only one of these alternatives is described.

The polymerizable composition according to the invention contains trimethylolpropane triacrylate as key component, other acrylate modifier, and an acrylate solvent (thinner). The polymerizable composition may also contain a nanosized siloxane-based trisacrylate filler to improve hardness and temperature stability and to increase refractive index of the final optical polymer composition.

### Trimethylolpropane triacrylate

One objective of the invention is to provide an unusually reactive acrylate that could replace usual initiators. If the polymerisation reaction could be initiated and completed without any additives, the final cured optical polymer composition would be theoretically more stable in stressful environmental conditions.

Experiments conducted with several mono-, di-, tri- and tetra-acrylates have shown that trimethylolpropane triacrylate is spontaneously polymerizable (cross-linkable) by heat, i.e. the composition can be cured without catalysts and initiators at elevated temperature. This key component produces solid polymer compositions at relatively low temperatures (under 200 °C), while other candidates can be polymerized without catalysts only at higher temperatures and the quality of these cured materials are poor and cannot be used for optoelectronics.

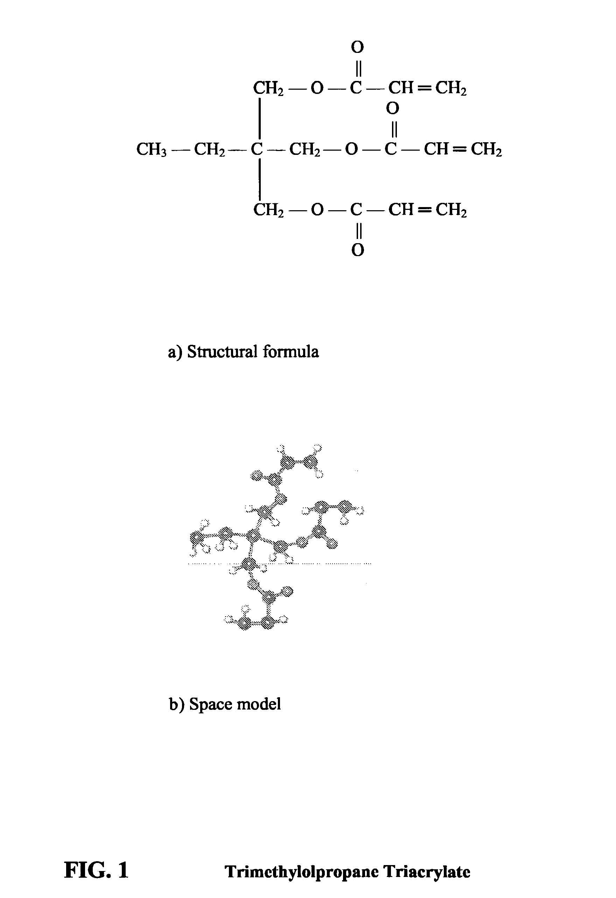

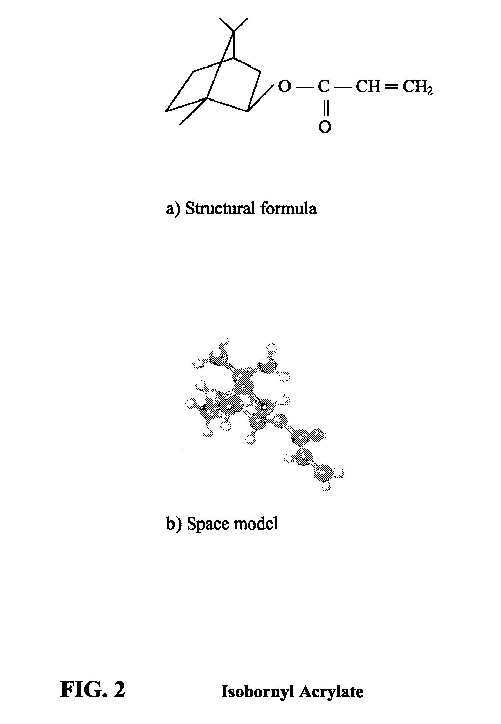

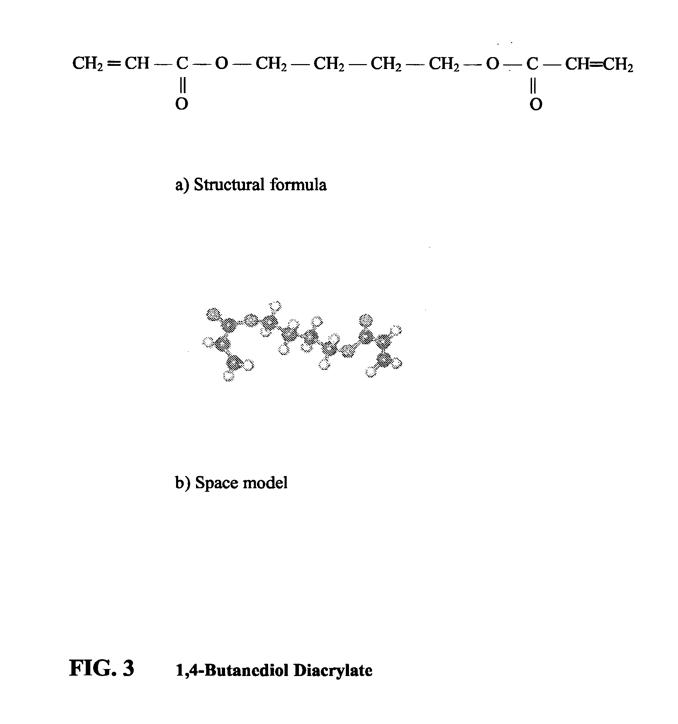

In order to obtain clear transparent polymer compositions from trimethylolpropane triacrylate, two or three acrylate modifiers are, however, needed. The compositions produced from these starting acrylate mixtures are thus free from any additives that may form chemical residues, which may deteriorate the properties of the optical polymer composition. The structure of this key component is shown in Fig.1. The structures of some necessary modifiers are shown in Figs. 2 and 3.

Solvents, chemicals and vapours may easily dissolve small molecular additives in traditional polymer compositions, but additive-free components consist of only a single cross-linked polymer molecule containing the starting component and modifiers and other components, such as reactive filler, and therefore they resist a wide range of environmental stresses.

It has been found by GCMS that trimethylolpropane triacrylate reacts instantaneously and completely as such at least at 280 °C in a gas chromatograph injector chamber in helium atmosphere. The reaction occurs in less than one second.

It has also been shown by reaction vial experiments that 150 - 170 °C temperature is enough for perfect polymerisation and curing during 30 min - 2 hours reaction time. The tests have revealed that the cured products are not, however, perfectly clear but white or opaque and may contain cracks.

It is obvious that the three acrylate groups attached to one carbon atom enhance their mutual reactivity because of their coordinated thermal vibrations. It can be presumed, without being bound to a theory, that the three groups in this component are the optimum because they do not yet present mutually any hindrances to their reactivity.

### Acrylic modifier

Addition of other acrylates to modify the optical and materials properties is preferable. Among different types of acrylates and other radical-reactive molecules tested, isobornyl acrylate or corresponding bicyclic hydrocarbon acrylates, especially bicyclic terpene acrylates, has proven to be the most beneficial.

Isobornyl acrylate has been found to improve clarity of cured compositions and formation of flawless surfaces. The molecular structure and the space model of this component are shown in Fig. 2. Using of more than 5 to 10 % isobornyl acrylate in the polymerizable composition, however, can cause significant oily nonreacted residues which were identified by mass spectrometry. Addition of a small amount (5 to 10 %) of reactive acrylate solvent is advantageous for perfect chemical bonding of isobornyl acrylate to the cured polymer composition backbone.

Other acrylates of bicyclic hydrocarbons (acryl-functionalized bicyclic hydrocarbons), especially acrylates of bicyclic terpenes, including bicyclic terpene derivatives, can also be used. Another example of a bicyclic hydrocarbon acrylate is fenchyl acrylate, which is an acrylate of bicyclic terpene. The term acrylate in this context encompasses also monomer molecules where the number of acrylate groups is more than one, such as diacrylates and triacrylates, which may be advantageous because of their reactivity.

### Trisacryl-functionalised polyhedral silsesquioxane (POSS) oligomers as a reactive inorganic filler

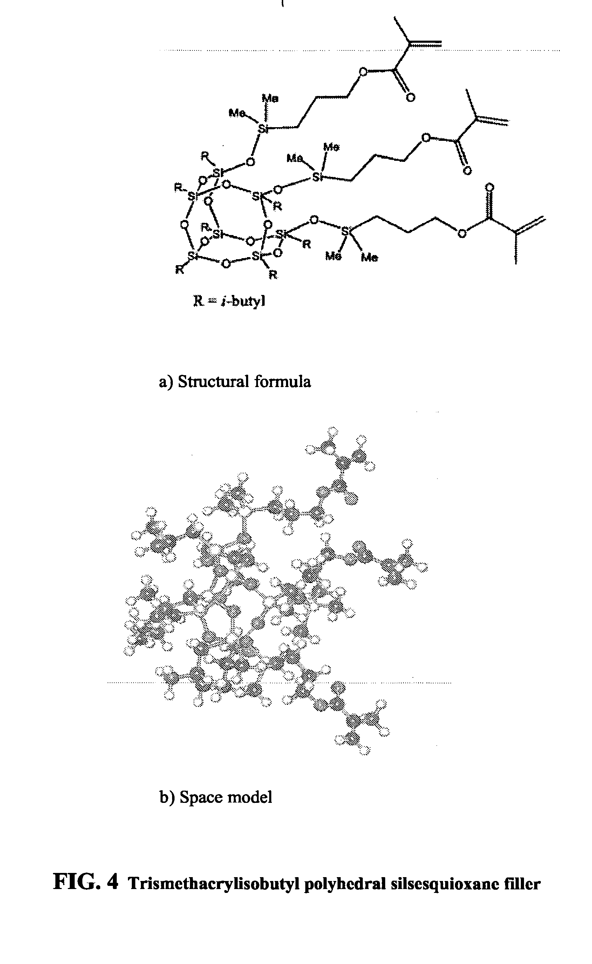

The basic molecule of the derivative shown in fig. 4, polyhedral silsesquioxane oligomer, often described as "cage"-type molecule, can be regarded as one of the smallest forms of silica or even as 'molecular silica', the molecules having the size of 1-3 nm. Its chemical composition is a hybrid, intermediate (RSiO1.5)ₙ between that of silica (Si02) and silicone (R2SiO). The derivative of the basic molecule has covalently bonded reactive functionalities suitable for polymerization or grafting POSS oligomers to polymer chains and nonreactive organic functionalities for solubilization and compatibilization.

Problems in obtaining clear solutions or dispersions have been encountered in preliminary experiments when thermally self-curing promising acrylate compositions were mixed with 5 to 20 nm silica nanoparticles. With 5 to 20 nm silica particles the obvious reason is agglomeration of particles with the consequence of formation of larger clusters that are not fully transparent in visible light. One of these nanofiller materials was originally dispersed in water or alcohol and we did not succeed to transfer the isolated silica nanoparticles into the acrylate encapsulation agent without causing harmful agglomeration during the phase transfer process. In any case the chemical bonding of these about 10 times larger nanoparticles to organic acrylate encapsulant is not easy because of the large weight and size difference between organic and inorganic species.

On the basis of our literature studies and preliminary experimental work, polyhedral oligomeric silsesquioxane (POSS) derivatives with very small particle size below of only 2 to 5 nm were chosen as the nanofillers to improve the thermal stability, rigidity, and hardness etc. of organic additive-free acrylate compositions.

Different acryl derivatized POSS fillers were tested by us and studied as the method to improve the properties of the composition. The only POSS-acrylate that produced clear, transparent optical adhesive with the new composition is trismethacrylisobutyl-POSS (Fig. 4). Its molecule weight MW = 1344.34 gm/mole. In the structural formula of 4a, other unreactive organic R substituents than isobutyl are also possible. The molecule possesses a hybrid inorganic-organic three-dimensional structure, which contains 3 methacryl groups. This multifunctional methacrylate can be used as an effective cross-linker in the cured composition. Other POSS fillers tested have produced white or poorly transparent cured materials.

The most important improvements obtained with POSS triacrylate seem to be reduction of the shrinkage of the optical polymer composition, improvement of thermal stability and refractive index and extension in the operational temperature range where the new materials can be applied.

### Reactive solvent (thinner)

Divinylbenzene (DVB) has been initially found necessary to start a repeatable curing of the composition for fully transparent, flawless encapsulation material without UV or thermal initiators. If curing was performed without a thinner higher temperatures had to be used and polymerization and curing reactions were then nearly explosive. Replacement of this reactive thinner, DVB, with a more acceptable reagent is, however, advantageous because of toxicological reasons, a bad smell and a higher reactivity of acryl groups compared to vinyl groups.

It was accordingly shown by experiments that replacement of divinylbenzene with butanedioldiacrylate (BDDA) with has the same carbon number and the same number of carbon-carbon double bonds was advantageous. The acrylate double bonds showed significantly better reactivity because of the carboxyl functions of the BDDA. The structure of this component is shown in Fig. 3.

Replacement of DVB with BDDA improved cured encapsulant properties by producing crack-free, transparent and colourless multifunctional junctions (mechanical-optical) and films without any flaws in the final product and improved reproducibility of the polymerization and curing process. The transparency of these polymer compositions were between 90 to 95 % over the whole visible wave length range. Refractive index was also measured and was between 1.49 to 1.50. Compared with trimethylolpropane triacrylate, the amount of BDDA needed is smaller, usually 5 to 10 % of the total weight of the composition. These amounts contribute to the even curing of the composition to a clear transparent flawless product.

### Undesirable side products

In addition to some unreacted residues of reactants, also small molecular side products have been detected in certain composition prototypes after thermal curing and they have been analysed by mass spectrometry. It has been found particularly that isobornyl acrylate is prone to decompose by cleavage of acrylate group and formation of double bond containing bicyclic hydrocarbons and tricyclic hydrocarbons. It is therefore necessary to control the polymerization and curing temperature, temperature program and presence or absence of inert gas and also the cooling speed of the cured junction or film. The amount of oily monomers and their decomposition products are significantly decreased or eliminated by using the polymer compositions and process conditions shown in examples 1 to 3.

The curable composition according to the invention is waterless, needs no catalysators or initiators, and results in a hard flawless optical polymer with good optical properties for transmission of light, good adherence to substrates, and good thermal resistance and resistance to moisture for long-term use in challenging environmental conditions.

### Effects of gas atmosphere on curing

Curing in air occurs reproducibly in closed vials, but formation of cured polymer composition films required originally inert gas atmosphere. Using optimized heating temperature profile in a high precision oven produced clear transparent cured films, but the hardness of the films was originally lower than after curing in inert gas. This was at least partly due to the lower reactivity of our original thinner, divinylbenzene. Cross linking reactions are not as effective in air as in inert gas because of the cut-off of the polymerisation chain reactions due to oxygen. Without an initiator, thermal polymerisation is more sensitive to oxygen inhibition than with peroxide or other thermal catalyst. Using of inert gas presents, however, no problem in mass production of devices incorporating the above-described optical polymer compositions because of different economical solutions for inert gas application. By replacement of divinylbenzene thinner with 1,4-butanedioldiacrylate the curing of optical films was, however, satisfactory with formation of hard cured surface.

### Optimisation of curing conditions

Several different experimental arrangements were used to find the most useful curing conditions. Heating on hot plate, on sand bath, in heating oven and finally in a high precision gas chromatograph oven were studied. Effect of inert gas was also carefully studied and curing atmosphere was monitored by mass spectrometry for oxygen.

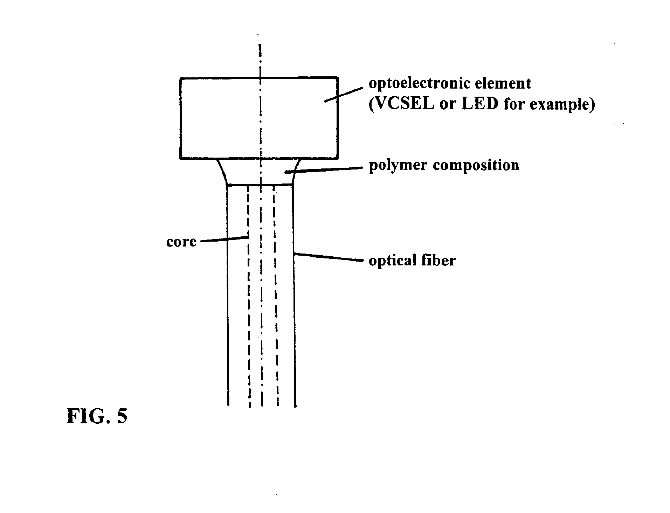

The optical polymer composition can be used in all optical applications above where it acts as material that optical data can pass through. It is especially useful in joining laser elements emitting communications data (such as VCSEL or LED) to optical fibres with a high precision, such as schematically illustrated by Fig. 5. However, the invention is not limited to solely this specific application.

### Examples

In the following, some examples of manufacturing optical polymer compositions are given. The examples do not limit the scope of the present invention defined by the enclosed claims. The preferred amounts according to the examples are: trimethylolpropane triacrylate 35 to 50 %, acryl-functionalized POSS 30 to 45 %, acryl functionalized bicyclic hydrocarbon 5 to 10 %, and BDDA 5 to 10 %.

### Example 1: Organic-Inorganic Nanoparticle-Filled Optical Polymer Junction Composition

Reagent mixture: Trimethylolpropane triacrylate (40 to 45%), trismethacrylisobutyl polyhedral silsesquioxane (40 to 45%), isobornyl acrylate (5 to 10 %), butanedioldiacrylate (5 to 10 %).

Procedure: The reagent mixture was placed into a 5 ccm glass vial and put into an oven heated to 180 °C kept at this temperature during 30 min. The product was allowed to cool slowly during one to four hours. The product was a hard, clear, transparent material. Refractive index = 1.49 and transparency between 92 to 94 % between 350 and 800 nm.

### Example 2: Organic-Inorganic Nanoparticle-Filled Optical Film

Reagent mixture: Trimethylolpropane triacrylate (between 35 to 50 %), Trismethacrylisobutyl polyhedral silsesquioxane (between 30 to 40 %), Isobornyl acrylate (between 5 to 10 %), butanedioldiacrylate (between 5 to 10 %).

Procedure: The reagent mixture was applied with a syringe on a flat glass or metal substrate. The sample was put in an oven heated to 160 °C under inert gas (argon) atmosphere and kept at this temperature during 30 min. The product was allowed to cool slowly. The product was a hard, clear, transparent film of about 1 mm thickness. Optical transmission of the film was about 90% between 350 and 800 nm.

### Example 3: Organic-Inorganic Nanopartice-Filled Optical Film

Reagent mixture: Trimethylolpropane triacrylate (40%), Trismethacrylisobutyl polyhedral silsesquioxane (40%), Isobornyl acrylate (10%), butanedioldiacrylate (10%).

Procedure: The reagent mixture was applied with a syringe on a flat glass or metal substrate. The sample was put on a precision thermostat oven and gradually heated using 20 °C per min temperature program up to 180 C and kept at this temperature during 30 min. The product was allowed to cool slowly. The product was a hard, clear, transparent film of about 1 mm thickness. Optical transmission of the film was about 90% between 350 and 800 nm.

### Cured composition for Optical Lens and Optical Junction Formation

Polymerizable composition is placed on a lens mould or applied with a micro syringe between communication radiator LED or VSEL etc., and optical fibre or optical fibre bunch or light channel. If the viscosity of the polymerizable composition is not high enough for the application, it can be adjusted by adding a small amount of thickener, for example 1 to 5 % of the total weight of the composition. The viscosity is adjusted to desired viscosity figure preferably with a reactive thickener that reacts with the curable constituents of the composition to retain the optical clarity. A long chain branched oligoacrylate can be used as the reactive thickener. One example of such thickeners are diacrylate oligomers, such as oligomers of butanedioldiacrylate. These thickeners can be used instead of hydroxyl or other water attracting thickeners to preserve water barrier property of the cured encapsulant, and they can be used to adjust the viscosity of the composition before curing in all applications. The use of both the acrylic thinner and the acrylic thickener may be simultaneously necessary to achieve necessary catalyst-free reactivity and required viscosity for each end application.

The most important objective in end user applications is to avoid microbubble formation, crack or flaw formation, oily residue or reaction side product formation and formation of non-transparent or opaque areas in lenses or optical junctions.

### Cured composition film formation

The best procedure for formation of even and clear optical films is heating a thin film injected on a glass plate or other substrate by 20 to 25 °C per minute in a programmable thermostat oven to about 170 to 190 °C, hold 30 to 60 min at the final temperature and then let the sample cool down slowly without opening the oven. This procedure produced satisfactory, clear, transparent cured films.

## Claims

1. Optical polymer composition, **characterized in that** it comprises thermally polymerized and cured trimethylolpropane triacrylate, bicyclic hydrocarbon acrylate, 1,4-butanedioldiacrylate, and trisacryl-functionalized polyhedral silsesquioxane oligomer.

2. Composition according to claim 1, **characterized in that** the composition is free of initiators and catalysts.

3. Composition according to claim 1 or 2, **characterized in that** the composition comprises bicyclic hydrocarbon acrylate not more than 10 %, preferably between 5 and 10 %.

4. Composition according to any of claims 1 to 3, **characterized in that** the bicyclic hydrocarbon acrylate is an acrylate of bicyclic terpene or bicyclic terpene derivative, such as isobornyl acrylate or fenchyl acrylate.

5. Composition according to any of claims 1 to 4, **characterized in that** the composition comprises not more than 10 %, preferably between 5 and 10 % 1,4-butanedioldiacrylate.

6. Composition according to any of claims 1 to 5, **characterized in that** the composition comprises
- 35 - 50 % trimethylolpropane triacrylate,
- 30 - 45 % trisacryl-functionalized polyhedral silsesquioxane oligomer.

7. Polymerizable composition for manufacturing an optical polymer, **characterized in that** it comprises a composition of uncured components according to any of claims 1 to 6.

8. Method of forming an optical polymer composition, **characterized by** polymerizing and curing a polymerizable composition according to claim 7.

9. Method according to claim 8, **characterized by** performing the polymerizing and curing at elevated temperature but below 200°C.

10. Use of the optical polymer composition according to any of the claims 1 to 6 in optical applications, as adhesive agent or moulding agent for joining and forming light transmitting junctions of optical components together, or as construction material for optical components to form an optical component on a structural part or substrate or between two structural parts, where the optical polymer acts as optical transmission path for data in optical form.

11. Use of the optical polymer composition according to any of the claims 1 to 6 in communications optoelectronics.

12. An optical device, **characterized in that** it contains one or more optical components or joints comprising an optical polymer composition according to any of claims 1 to 6.

## Patentansprüche

1. Optische Polymerzusammensetzung, **dadurch gekennzeichnet, dass** sie thermisch polymerisiertes und gehärtetes Trimethylolpropantriacrylat, bicyclisches Kohlenwasserstoff-Acrylat, 1,4-Butandioldiacrylat und Trisacryl-funktionalisiertes polyedrisches Silsesquioxan-Oligomer umfasst.

2. Zusammensetzung nach Anspruch 1, **dadurch gekennzeichnet, dass** die Zusammensetzung frei von Initiatoren und Katalysatoren ist.

3. Zusammensetzung nach Anspruch 1 oder 2, **dadurch gekennzeichnet, dass** die Zusammensetzung bicyclisches Kohlenwasserstoff-Acrylat zu höchstens 10%, vorzugsweise zwischen 5 und 10%, umfasst.

4. Zusammensetzung nach irgendeinem der Ansprüche 1 bis 3, **dadurch gekennzeichnet, dass** das bicyclische Kohlenwasserstoff-Acrylat ein Acrylat von bicyclischem Terpen oder bicyclischem Terpenderivat, beispielsweise Isobornylacrylat oder Fenchylacrylat, ist.

5. Zusammensetzung nach irgendeinem der Ansprüche 1 bis 4, **dadurch gekennzeichnet, dass** die Zusammensetzung höchstens 10%, vorzugsweise zwischen 5 und 10%, 1,4-Butandioldiacrylat umfasst.

6. Zusammensetzung nach irgendeinem der Ansprüche 1 bis 5, **dadurch gekennzeichnet, dass** die Zusammensetzung
- 35-50% Trimethylolpropantriacrylat,
- 30-45% Trisacryl-funktionalisiertes polyedrisches Silsesquioxan-Oligomer umfasst.

7. Polymerisierbare Zusammensetzung zur Herstellung eines optischen Polymers, **dadurch gekennzeichnet, dass** sie eine Zusammensetzung ungehärteter Komponenten nach irgendeinem der Ansprüche 1 bis 6 umfasst.

8. Verfahren zum Formen einer optischen Polymerzusammensetzung, **gekennzeichnet durch** Polymerisieren und Härten einer polymerisierbaren Zusammensetzung nach Anspruch 7.

9. Verfahren nach Anspruch 8, **gekennzeichnet durch** Durchführen des Polymerisierens und Härtens bei erhöhter Temperatur, aber unter 200°C.

10. Verwendung der optischen Polymerzusammensetzung nach irgendeinem der Ansprüche 1 bis 6 in optischen Anwendungen als Klebstoff oder Formmittel zum Verbinden und Zusammenformen lichtdurchlässiger Verbindungen optischer Bauteile oder als Konstruktionsmaterial für optische Bauteile zum Anformen eines optischen Bauteils an ein Strukturteil oder Substrat oder zwischen zwei Strukturteilen, wobei das optische Polymer als optischer Übertragungsweg für Daten in optischer Form wirkt.

11. Verwendung der optischen Polymerzusammensetzung nach irgendeinem der Ansprüche 1 bis 6 in Kommunikationsoptoelektronik.

12. Optische Vorrichtung, **dadurch gekennzeichnet, dass** sie ein(e) oder mehrere optische Bauteile oder Verbindungen enthält, die eine optische Polymerzusammensetzung nach irgendeinem der Ansprüche 1 bis 6 umfassen.

## Revendications

1. Composition de polymère optique, **caractérisée en ce qu'**elle comprend du triacrylate de triméthylolpropane, un acrylate d'hydrocarbure bicyclique, du diacrylate de 1,4-butanediol, et un oligomère de silsesquioxane polyédrique fonctionnalisé avec un trisacryle, polymérisés et durcis thermiquement.

2. Composition selon la revendication 1, **caractérisée en ce que** la composition est exempte d'initiateurs et de catalyseurs.

3. Composition selon la revendication 1 ou 2, **caractérisée en ce que** la composition comprend un acrylate d'hydrocarbure bicyclique à concurrence d'eau maximum 10%, préférablement entre 5 et 10%.

4. Composition selon l'une quelconque des revendications 1 à 3, **caractérisée en ce que** l'acrylate d'hydrocarbure bicyclique est un acrylate de terpène bicyclique ou d'un dérivé de terpène bicyclique, tel que l'acrylate d'isobomyle ou l'acrylate de fenchyle.

5. Composition selon l'une quelconque des revendications 1 à 4, **caractérisée en ce que** la composition ne comprend pas plus de 10%, préférablement entre 5 et 10%, de diacrylate de 1,4-butanediol.

6. Composition selon l'une quelconque des revendications 1 à 5, **caractérisée en ce que** la composition comprend
- 35 à 50 % de triacrylate de triméthylolpropane,
- 30 à 45% d'un oligomère de silsesquioxane polyédrique fonctionnalisé avec un trisacryle.

7. Composition polymérisable pour la fabrication d'un polymère optique, **caractérisée en ce qu'**elle comprend une composition de composants non durcis selon l'une quelconque des revendications 1 à 6.

8. Procédé de formation d'une composition de polymère optique, **caractérisé par** la polymérisation et le durcissement d'une composition polymérisable selon la revendication 7.

9. Procédé selon la revendication 8, **caractérisé par** l'exécution de la polymérisation et du durcissement à une température élevée mais inférieure à 200°C.

10. Utilisation de la composition de polymère optique selon l'une quelconque des revendications 1 à 6 dans des applications optiques, en tant qu'agent adhésif ou agent de moulage pour joindre et former des jonctions transmettant la lumière de composants optiques ensemble, ou en tant que matière de construction pour des composants optiques pour former un composant optique sur une partie structurelle ou substrat ou entre deux parties structurelles, où le polymère optique agit comme un chemin de transmission optique pour des données sous forme optique.

11. Utilisation de la composition de polymère optique selon l'une quelconque des revendications 1 à 6 dans des composants optoélectroniques de communications.

12. Dispositif optique, **caractérisé en ce qu'**il contient un ou plusieurs composants ou joints optiques comprenant une composition de polymère optique selon l'une quelconque des revendications 1 à 6.
